Europäisches Patentamt

European Patent Office

Office européen des brevets

(11) Veröffentlichungsnummer: **0 128 540**
**A2**

# (12) EUROPÄISCHE PATENTANMELDUNG

(21) Anmeldenummer: 84106526.1

(22) Anmeldetag: 07.06.84

(51) Int. Cl.³: **C 08 F 2/10**, B 27 K 3/15, C 04 B 41/28

(30) Priorität: 10.06.83 PL 242497

(43) Veröffentlichungstag der Anmeldung: 19.12.84
Patentblatt 84/51

(84) Benannte Vertragsstaaten: BE DE FR

(71) Anmelder: Politechnika Krakowska im. Tadeusza Kosciuszki, ul. Warszawska 24, 31-155 Krakow (PL)

(72) Erfinder: Bodnar, Maria, Dipl.-Ing., ul. Staszica 8/6, Kraków (PL)
Erfinder: Broniewski, Tadeusz, Doz. Dr.-Chem., ul. Na Blonie 11a 86, Kraków (PL)

(74) Vertreter: Hansen, Bernd, Dr.rer.nat. et al, Hoffmann, Eitle & Partner Patentanwälte Arabellastrasse 4, D-8000 München 81 (DE)

(54) Verfahren zur Führung der Polymerisation von Monomeren in imprägnierten Elementen aus porösem Baustoff.

(57) Es wird ein Verfahren zur Führung der Polymerisation von Monomeren in imprägnierten Elementen aus porösem Baustoff mittels einer katalytischen Methode bei erhöhter Temperatur, unter Anwendung eines Polymerisationsmediums, das einen Verlust an flüchtigem Monomer verringert, beschrieben, wobei als Polymerisationsmedium eine Umhüllung aus Mineralschüttgut verwendet wird.

EP 0 128 540 A2

- 1 -

Verfahren zur Führung der Polymerisation von Monomeren in imprägnierten Elementen aus porösem Baustoff

Die Erfindung betrifft ein Verfahren zur Durchführung der Monomerpolymerisation in imprägnierten Elementen aus porösem Baustoff.

Die bis jetzt zur Tiefimprägnierung von Betonen,
Steinen, Holz oder anderen porösen Baustoffen angewandten flüchtigen Monomeren, z.B. das Methylmethacrylat, als Flüssigkeiten von kleiner Viskosität
dringen leicht in Poren der imprägnierten Baustoffe
ein. Ferner wird das Monomer in Poren dieser Baustoffe polymerisiert. Nach der Härtung verleiht
das Imprägnierungsmittel dem Baustoff neue wertvolle
Eigenschaften, z.B. erhöht es erheblich dessen Widerstandsfähigkeit, Frostbeständigkeit, Verschleissfestigkeit, Korrosionsbeständigkeit und es reduziert
die Aufnahmefähigkeit.

Zur Umwandlung des Monomeren zum Polymeren in dem
imprägnierten Stoff verwendet man eine Strahlungspolymerisation oder eine thermokatalytische Polymerisation.

Die Strahlungspolymerisation basiert auf der Anwendung von Kernstrahlung als Agens, das eine Polyreaktion bewirkt.

Die thermokatalytische Polymerisation basiert auf der Anwendung von chemischen Initiatorsubstanzen (Radikalbildnern) der Polymerisation, d.h. Katalysatoren, wobei dessen Wirkung durch Erwärmung, z.B. auf eine Temperatur von ca. +70 bis +85°C, aktiviert wird. In der Technologie der Imprägnierung wird die Strahlungspolymerisation sehr selten angewandt, was auf Schwierigkeiten der Verfügung über die entsprechenden Strahlungsquellen und den beschränkten Wirkungsbereich zurückführbar ist. Sie findet nur in den nicht zahlreichen Fällen der Steinimprägnierung Anwendung.

Die thermokatalytische Imprägnierung wird allgemein in der Beton- und Holzimprägnierung angewandt.

Die wesentlichen technologischen Schwierigkeiten während der Imprägnierung dieser Stoffe werden durch den Verlust des flüchtigen Monomers durch Verdampfung im Verlauf des Verfahrens der thermokatalytischen Polymerisation verursacht, wodurch eine äusserliche dünne Schicht des imprägnierten Elementes unimprägniert verbleibt. Im Falle von Betonelementen ist dieser Effekt ohne grössere Bedeutung. Sein Bereich beschränkt sich durch die Anwendung eines Wasserbades, das ein Heizmedium darstellt und das die Verdampfung des Monomoren erschwert.

Die Monomerverluste, die durch die Wasserlöslichkeit der Monomeren verursacht sind, werden durch
Anwendung von konzentrierten Salzlösungen anstelle
von Reinwasser, z.B. Natriumcarbonat- und Natriumchlorid-Lösungen oder auch Mäntel aus Aluminium-
und Polyethylenfolie oder anderen Folien beschränkt.
Im Falle der Imprägnierung von Steinelementen ist
das Problem der Monomerabnahme aus der Oberflächenschicht des Elements von besonderem Gewicht. Die
Imprägnierung von porösen Bausteinen hat vor allem
Bedeutung für die Wartung bzw. Erhaltung von wertvollen Zierelementen und insbesondere die Bildhauerei. In diesem Zusammenhang ist ein Verlust von Imprägnierungsmittel aus der Oberflächenschicht des
Elements nicht tolerierbar. Die Vorbeugung des Monomerverlusts durch Anwendung eines Wasserbads ist
in diesem Falle unzureichend und die Anwendung gesättigter Salzlösungen, die ohne Zweifel eine erheblich grössere Dichte als das Monomer besitzen, verursacht ein Ausstossen des Monomers aus den Poren
der Steine, die in der Regel eine ganz andere Struktur als der Beton haben.

Aufgabe der vorliegenden Erfindung ist die Vermeidung der oben genannten Nachteile durch Bereitstellung eines Verfahrens, das die Abnahme des Gehaltes
des Imprägnierungsmittels von der Oberfläche des
Elements vollständig bzw. weitgehend vermeidet, wodurch man eine volle Tiefimprägnierung erreicht.
Zu diesem Zweck wird als Medium der katalytischen
Polymerisation eine Umhüllung aus Schüttgut bzw.

Schüttgut aus Mineralstoffen, insbesondere Mineralsalzen, eingesetzt. Es ist auch von Nutzen, als
Umhüllung aus Mineralschüttgut das Siedekochsalz
zu verwenden. Ein solcher Stoff mit einer entsprechenden Kornzusammensetzung bildet eine hinreichend
dichte Schicht, die nach Beendigung der Imprägnierung von der Oberfläche des Elements leicht entfernt werden kann, ohne Auswüchse des polymerisierten Imprägnierungsmittels zu ergeben.

Die Anwendung einer solchen Umhüllung als Dichtungsschicht und Heizmedium ermöglicht es, die Abnahme
des Imprägnierungsmittels von der Oberfläche des
Elements zu vermeiden. Mehr noch: im Falle der Anwendung von Siedekochsalz hat diese Lösung noch den Vorzug, dass es dank der Salzlöslichkeit in Wasser nach
beendeter Polymerisation leicht von der Oberfläche
durch Abwaschen entfernt werden kann.

Die Beschreibung eines beispielhaften Verfahrens
der Führung der Monomerpolymerisation in imprägnierten Elementen aus porösem Faustoff erläutert das
erfindungsgemässe Verfahren weiter.

Beispiel

Ein Steinelement aus Pińczów-Kalkstein wird bei
Raumtemperatur mit Methylmethacrylat imprägniert,
das in einer Menge von 0,7 Gew.% einen zugegebenen Polymerisationsinitiator - das Isoazobutyronitril - enthält.

Nach Abziehen des Monomers aus dem Bad wird das Element in einem Behälter angeordnet, in welchem die Polymerisation durchgeführt wird und es wird mit einer Schicht aus Schüttgut, das auf die Polymerisationstemperatur vorerwärmt wird, belegt. Als Schüttgutschicht kann man das Steinsalz ausnutzen. Ferner wird der Behälter mit dem Inhalt einer Erwärmung auf die eigentliche Polymerisationstemperatur, d.h. auf eine Temperatur von 80°C, während einigen Stunden unterworfen. Der Verbrauch an Imprägnierungsmittel beträgt ca. 15 Gew.% im Verhältnis zur Steinmasse. Bei den bisherigen Methoden der Polymerisationsführung beträgt der Verlust an Monomer bis zu 30 % der Monomermenge, die durch den Stein absorbiert wurde. Bei Verwendung der vorgeschlagenen Methode beträgt dieser Verlust kaum ca. 1,5 %. Nach Beendigung der Polymerisation wird das imprägnierte Element herausgenommen, die Umhüllungsschicht mechanisch entfernt und die Oberfläche des Elements mit Wasser gewaschen.

PATENTANSPRÜCHE

1.  Verfahren zum Führen der Polymerisation von Monomeren in imprägnierten Elementen aus porösem Baustoff mittels einer katalytischen Methode bei erhöhter Temperatur, unter Anwendung eines Polymerisationsmediums, das einen Verlust an flüchtigemMonomer verringert, dadurch g e k e n n z e i c h n e t , dass als Polymerisationsmedium eine Umhüllung aus Mineralschüttgut verwendet wird.

2.  Verfahren nach Anspruch 1, dadurch g e k e n n - z e i c h n e t , dass als Umhüllung aus Mineralschüttgut das Siedekochsalz bzw. Steinsalz verwendet wird.